# EUROPÄISCHE PATENTSCHRIFT

(11) **EP 1 233 655 B1**
(45) Veröffentlichungstag und Bekanntmachung des Hinweises auf die Patenterteilung: **12.05.2010**
(21) Anmeldenummer: 02002675.3
(22) Anmeldetag: 06.02.2002
(51) Int. Cl.: H05B 37/02, H01H 25/06

(54) **Unterputzeinsatz für Kombinierte Beleuchtung/Lüfter-Ansteuerung**
Flush mounting for combined light/ventilation control
Montage encastrable pour contrôle combiné de lumière/ventilation

(30) Priorität: 20.02.2001 DE 10107805
(43) Veröffentlichungstag der Anmeldung: 21.08.2002
(73) Patentinhaber: ABB AG, 68309 Mannheim (DE)
(72) Erfinder: Goldyn, Dirk, Dipl.-Ing., 58454 Witten (DE); Grotensohn, Michael, Dipl.-Ing., 58507 Lüdenscheid (DE); Haardt, Kuno, Dipl.-Ing., 57072 Siegen (DE)

(56) Entgegenhaltungen:
- DE-A1- 3 836 625
- GB-A- 2 067 356
- US-A- 4 990 908
- US-A- 5 338 910

## Beschreibung

Die Erfindung bezieht sich auf einen Unterputzeinsatz für kombinierte Beleuchtung/Lüfter-Ansteuerung gemäß dem Oberbegriff des Patentanspruchs 1 und kann beispielsweise bei Toilettenanlagen verwendet werden.

Aus der DE 38 36 625 A1 ist eine Steuervorrichtung zum Ein- und Ausschalten der Beleuchtung eines fensterlosen Raumes und eines Ventilators mittels eines manuell betätigbaren Betätigungsorgans bekannt. Die Steuervorrichtung weist auch Drehzahlstellmittel zum Einstellen unterschiedlicher Drehzahlen des Motors des Ventilators auf. Die Steuervorrichtung kann vorzugsweise als kompaktes, in eine übliche Unterputzdose einsetzbares Steuergerät ungefähr in der Baugröße eines herkömmlichen Lichtschalters ausgebildet sein

In der Hausinstallationstechnik (beispielsweise bei Toilettenanlagen) besteht vielfach die Anforderung, erst nach Ablauf einer definierten Verzögerungszeit (Einschaltverzögerung) nach dem Einschalten einer Beleuchtung automatisch einen Lüfter einzuschalten. Nach erfolgtem Ausschalten der Beleuchtung soll der Lüfter noch während einer definierten Nachlaufzeit (Ausschaltverzögerung) weiterbetrieben werden. Für einen solchen Anwendungsfall werden üblicherweise ein manuell betätigbarer Schalter zur Ein/Ausschaltung der Beleuchtung sowie ein separates Zeitglied zur Spannungsversorgung inklusive Ein/Ausschaltverzögerung des Lüfters herangezogen.

Anstelle des manuellen Schalters kann auch ein Bewegungsmelder eingesetzt werden. Das separate Zeitglied wird in der zentralen Verteilung oder einer Verteilerdose untergebracht oder es ist alternativ direkt im Lüfter integriert. Insgesamt ergibt sich eine relativ aufwendige Verkabelung, da der Lüfteranschluss zusätzlich in die Verteilung verlegt werden muss.

Der Erfindung liegt die Aufgabe zugrunde, einen Unterputzeinsatz anzugeben, welcher eine kombinierte Beleuchtung/Lüfteransteuerung mittels manuellem Schalter und mittels Bewegungsmelder ermöglicht.

Diese Aufgabe wird erfindungsgemäß gelöst durch einen Unterputzeinsatz für kombinierte Beleuchtung/Lüfteransteuerung mit einem Kombieinsatz, welcher mit Anschlüssen für Beleuchtung, Lüfter und Netz, mit einer Schnittstelle zum Anschluss eines die Beleuchtung schaltenden Bedienelementes, und mit mindestens einem Potentiometer zur Auswahl der Betriebsarten, insbesondere zur Vorgabe von unterschiedlichen Einschaltverzögerungen und Nachlaufzeiten für den Lüfter versehen ist, wobei der Kombieinsatz die zur Bildung von Einschaltverzögerungen und Nachlaufzeiten erforderliche Elektronik aufweist und wobei zur Befestigung eines Bedienelementes am Unterputzeinsatz Klammern vorgesehen sind.

Die mit der Erfindung erzielbaren Vorteile bestehen nicht nur darin, das der Schalter für die Beleuchtung und das Zeitglied für die Lüfteransteuerung in einem einzigen Unterputzeinsatz kombiniert sind, was Vorteile hinsichtlich der erforderlichen Kabelinstallation hat und zudem den notwendigen Raumbedarf herabsetzt, sondern dass ein und derselbe Unterputzeinsatz universell und wahlweise für die Bestückung mit einem manuell betätigbaren Schalter und mit einem Bewegungsmelder geeignet ist.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Sicht auf einen Unterputzeinsatz,
- Fig. 2: eine Sicht auf ein Bewegungsmelder-Bedienelement,
- Fig.3: eine Sicht auf ein Schalter-Bedienelement,
- Fig. 4: den zeitlichen Verlauf der Ein/Aus-Signale von Beleuchtung und Lüfter.

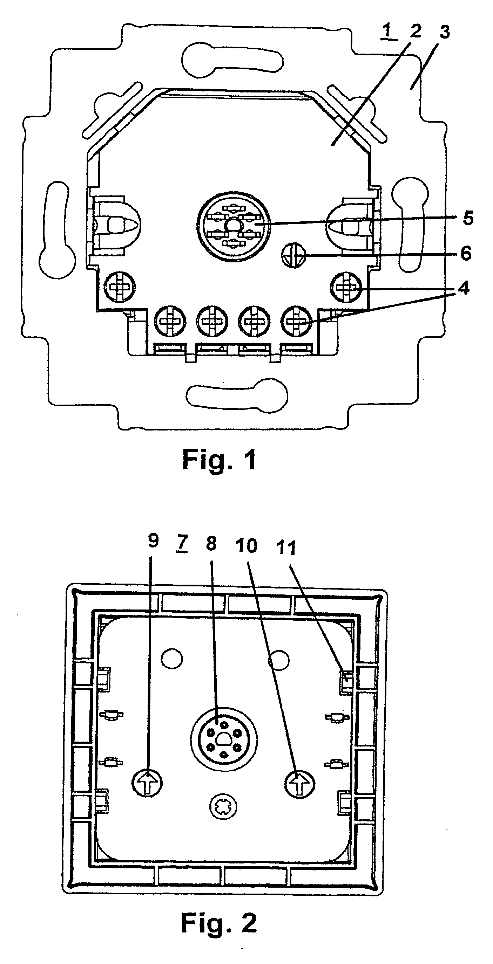

In Fig. 1 ist eine Sicht auf einen Unterputzeinsatz dargestellt. Der Unterputzeinsatz 1 besteht im wesentlichen aus einem Kombieinsatz 2 und einem Tragring 3. Der Kombieinsatz 2 enthält die zur Bildung der Ein/Ausschaltverzögerungen für den Lüfter erforderliche Elektronik und weist insgesamt sechs Anschlüsse 4 für Beleuchtung (Ausgang I), Lüfter (Ausgang II) und Netz (Eingang), eine zentrale Schnittstelle 5 (Dom) für den Anschluß eines Bedienelementes (Bewegungsmelder-Bedienelement oder Schalter-Bedienelement) sowie ein Potentiometer 6 (Betriebsarten-Potentiometer) auf.

Das Potentiometer 6 dient zur Auswahl der Betriebsarten, insbesondere zur Vorgabe von unterschiedlichen Einschaltverzögerungen T_{E} und Nachlaufzeiten T_{N} für den Lüfter. Optional ist mittels des Potentiometers 6 auch ein Automatikbetrieb einstellbar, bei welchem die Nachlaufzeit T_{N} automatisch der Einschaltdauer der Beleuchtung angepaßt wird, d. h. die Nachlaufzeit verlängert sich automatisch mit zunehmender Einschaltdauer.

In Fig. 2 ist eine Sicht auf die Anschlußfläche eines Bewegungsmelder-Bedienelementes dargestellt. Das Bewegungsmelder-Bedienelement 7 weist eine zentrale Schnittstelle 8 (Dom) zur Kontaktierung mit der Schnittstelle 5 sowie zwei Potentiometer 9 bzw. 10 zur Einstellung der Helligkeit-Ansprechschwelle bzw. der Ausschaltverzögerung des Bewegungsmelders auf. Randseitig angebrachte Klammern 11 dienen zur Montage (Verrastung) am Unterputzeinsatz 1.

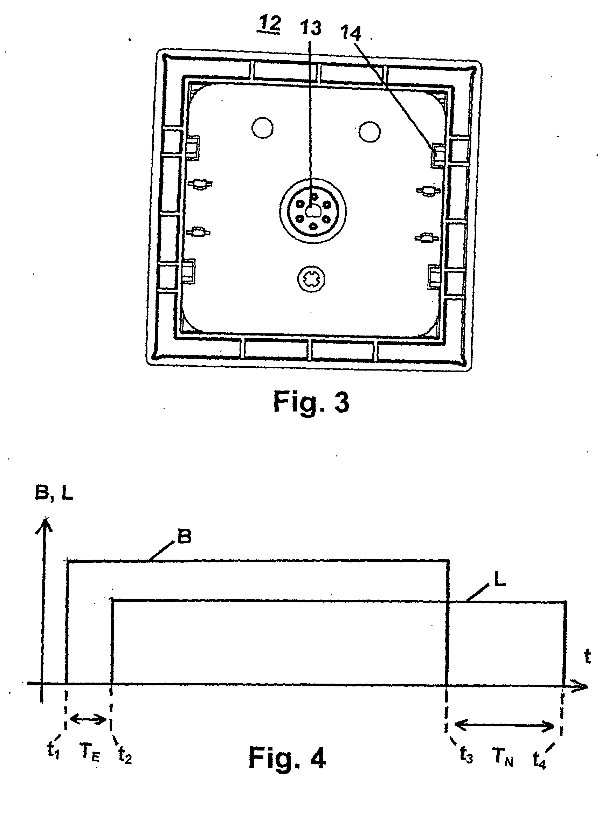

In Fig. 3 ist eine Sicht auf die Anschlußfläche eines Schalter-Bedienelementes dargestellt. Das Schalter-Bedienelement 12 weist eine zentrale Schnittstelle 13 (Dom) zur Kontaktierung mit der Schnittstelle 5 auf. Des weiteren sind randseitig angebrachte Klammern 14 zur Montage am Unterputzeinsatz 1 vorgesehen.

Wesentlich ist, daß die mechanische und elektrische Adaption des Schalter-Bedienelementes 12 und des Bewegungsmelder-Bedienelementes 7 identisch sind, damit ein und derselbe Unterputzeinsatz 1 wahlweise mit einem Bewegungsmelder-Bedienelement 7 oder einem Schalter-Bedienelement 12 bestückt werden kann.

In Fig. 4 ist der zeitliche Verlauf der Ein/Aus-Signale von Beleuchtung und Lüfter dargestellt. Zum Zeitpunkt t₁ wird die Beleuchtung eingeschaltet. Dies erfolgt entweder durch manuelle Betätigung des Schalter-Bedienelementes 12 oder automatisch durch Erfassung einer Person mittels des Bewegungsmelders (siehe Bewegungsmelder-Bedienelement 7). Nach Ablauf einer definierten Einschaltverzögerung T_{E} schaltet die Elektronik des Kombieinsatzes 5 zum Zeitpunkt t₂ den Lüfter ein. Zum Zeitpunkt t₃ wird die Beleuchtung ausgeschaltet, was entweder durch manuelle Betätigung des Schalter-Bedienelementes 12 oder automatisch durch den Bewegungsmelder (siehe Bewegungsmelder-Bedienelement 7) erfolgt, welcher detektiert, daß sich die zuvor erfaßte Person aus dem zu überwachenden Bereich entfernt. Nach Ablauf einer definierten Ausschaltverzögerung T_{N} (Nachlaufzeit) schaltet die Elektronik des Kombieinsatzes 5 zum Zeitpunkt t₄ den Lüfter aus.

Wie aus Fig. 4 zu erkennen ist, ist die Einschaltverzögerung T_{E} zweckmäßig derart definiert, daß der Lüfter nicht anläuft, wenn die Beleuchtung vor Ablauf der Einschaltverzögerung T_{E} wieder ausgeschaltet wird. Erst wenn die aktuelle Einschaltzeit der Beleuchtung die Einschaltverzögerung T_{E} überschreitet, wird der Ausgang II aktiviert. Auf diese Weise wird ein unnötiger Betrieb des Lüfters verhindert.

## Patentansprüche

1. Unterputzeinsatz für kombinierte Beleuchtung/Lüfter-Ansteuerung mit einem Kombieinsatz (2), welcher mit Anschlüssen (4) für Beleuchtung, Lüfter und Netz, mit einer Schnittstelle (5) zum Anschluss eines die Beleuchtung schaltenden Bedienelementes (7, 12), und mit mindestens einem Potentiometer (6) zur Auswahl der Betriebsarten, insbesondere zur Vorgabe von unterschiedlichen Einschaltverzögerungen (T_{E}) und Nachlaufzeiten (T_{N}) für den Lüfter versehen ist, wobei der Kombieinsatz (2) die zur Bildung von Einschaltverzögerungen und Nachlaufzeiten erforderliche Elektronik aufweist, **gekennzeichnet durch** Klammern (11, 14) zur Befestigung eines Bedienelementes (7, 12) am Unterputzeinsatz.

2. Unterputzeinsatz nach Anspruch 1, **gekennzeichnet durch** ein manuell betätigbares Schalter-Bedienelement (12) mit einer Schnittstelle (13) zur Kontaktierung der Schnittstelle (5) des Unterputzeinsatzes.

3. Unterputzeinsatz nach Anspruch 1, **gekennzeichnet durch** ein Bewegungsmelder-Bedienelement (7) mit einer Schnittstelle (8) zur Kontaktierung der Schnittstelle (5) des Unterputzeinsatzes.

## Claims

1. A flush-mounted insert for combined lighting/fan control, comprising a combination insert (2) which is provided with connections (4) for lighting, fans and mains, an interface (5) for the connection of an operating element (7, 12) which switches the lighting and at least one potentiometer (6) for selecting the types of operation, especially for predetermining different switch-on delays (T_{E}) and after-run times (T_{N}) for the fan, with the combination insert (2) comprising the electronic system required for forming the switch-on delays and after-run times, **characterized by** clamps (11, 14) for fastening an operating element (7, 12) to the flush-mounted insert.

2. A flush-mounted insert according to claim 1, **characterized by** a switch operating element (12) which can be actuated manually and comprises an interface (13) for making contact with the interface (5) of the flush-mounted insert.

3. A flush-mounted insert according to claim 1, **characterized by** a motion-detector operating element (7) with an interface (8) for making contact with the interface (5) of the flush-mounted insert.

## Revendications

1. Insert sous enduit pour l'activation combinée de l'éclairage et de la ventilation avec un insert combiné (2) qui est muni de branchements (4) pour l'éclairage, le ventilateur et le réseau, avec une interface (5) pour le branchement d'un élément de commande (7, 12) qui commute l'éclairage et avec au moins un potentiomètre (6) pour la sélection des modes de fonctionnement, en particulier pour la définition de différentes temporisations de démarrage (T_{E}) et temporisations d'arrêt (T_{N}) du ventilateur, dans lequel l'insert combiné (2) possède l'électronique nécessaire pour constituer des temporisations de démarrage et des temporisations d'arrêt, **caractérisé en ce qu'**il possède des agrafes (11, 14) pour la fixation d'un élément de commande (7, 12) sur l'insert sous enduit.

2. Insert sous enduit selon la revendication 1, **caractérisé en ce qu'**il comporte un élément de commande à commutateur (12) actionnable manuellement avec une interface (13) pour la mise en contact avec l'interface (5) de l'insert sous enduit.

3. Insert sous enduit selon la revendication 1, **caractérisé en ce qu'**il comporte un élément de commande à détecteur de mouvement (7) avec une interface (8) pour la mise en contact avec l'interface (5) de l'insert sous enduit.
